# EUROPEAN PATENT APPLICATION

(11) **EP 4 811 068 A1**
(43) Date of publication of application: **23.09.2026**
(21) Application number: 25870569.8
(22) Date of filing: 04.08.2025
(51) Int. Cl.: G05D 1/43

(54) **AUTONOMOUS DRIVING-BASED VEHICLE STEERING CONTROL METHOD AND SYSTEM**

(30) Priority: 30.09.2024 CN 202411383239
(71) Applicant: Chery Automobile Co., Ltd., Wuhu, Anhui 241006 (CN)
(72) Inventor: CHEN, Xiang, Wuhu, Anhui 241006 (CN); FAN, Yihong, Wuhu, Anhui 241006 (CN); LIU, Huijian, Wuhu, Anhui 241006 (CN); QU, Yuan, Wuhu, Anhui 241006 (CN); YIN, Shanhui, Wuhu, Anhui 241006 (CN)
(74) Representative: Adamson Jones
(86) International application number: PCT/CN2025/112533
(87) International publication number: WO 2026/066665

(57) **Abstract**

An autonomous driving-based vehicle steering control method and system, wherein the method comprises: on the basis of historical vehicle driving data, determining the proportion of driving control executed by a vehicle autonomous control server, when the proportion is less than a proportion threshold, sending a control request to a vehicle manager; otherwise, calculating a real-time processing index of the vehicle autonomous control center at this time on the basis of real-time turning intersection traffic data, when the real-time processing index is less than a processing threshold, sending a control request to the vehicle manager; otherwise, acquiring real-time vehicle driving data and combining same with the rea-time intersection traffic to calculate a control authority handover value of a vehicle; and when a steering wait duration is less than the control authority handover value, controlling vehicle steering by means of the vehicle autonomous control center; otherwise, sending a control request to the vehicle manager. The task completion time of driverless vehicles can be reduced, and congestion at turning intersections can be avoided, solving the problem in existing driverless vehicles of prolonged travel time during turning maneuvers.

## Description

This application is based upon and claims priority to Chinese Patent Application No. 202411383239.1, filed on September 30, 2024, and entitled "VEHICLE STEERING CONTROL METHOD AND SYSTEM BASED ON AUTONOMOUS DRIVING," the entire contents of which are incorporated herein by reference.

### TECHNICAL FIELD

The present disclosure relates to the technical field of intelligent control, and in particular, relates to a vehicle steering control method and system based on autonomous driving.

### BACKGROUND

Statements in this section merely provide background information related to the present disclosure and do not necessarily constitute the related art.

Autonomous driving refers to a technology in which a vehicle is capable of achieving autonomous control via its environmental perception, route planning, and its own vehicle state without direct human manipulation. Autonomous driving utilizes various sensors and advanced monitoring systems to perceive and obtain dynamic changes of an external environment and the vehicle. Based on technologies such as machine learning, computer vision, and deep learning, an autonomous driving vehicle may perform driving operations autonomously and safely.

However, during a process where the autonomous driving vehicle prepares to steer and travel, based on the determination of autonomous driving safety, a situation may occur where the vehicle stays in place for a long time waiting for clear of a safety event before performing a driving operation. This not only increases a task completion time of the autonomous driving vehicle, but also may cause congestion at a steering intersection.

### SUMMARY

In order to solve the deficiencies of the related art, the present disclosure provides a vehicle steering control method and system based on autonomous driving, an electronic device, a computer-readable storage medium, and a computer program product. By comprehensively considering historical data at a steering intersection, real-time traffic conditions, and a real-time driving condition of an autonomous driving vehicle, switching of a driving subject of the autonomous driving vehicle is performed, thereby reducing a task completion time of the autonomous driving vehicle and reducing a congestion possibility at the steering intersection.

In a first aspect, some embodiments of the present disclosure provide a vehicle steering control method based on autonomous driving. The method includes:
acquiring historical vehicle traveling data, and determining, based on the historical vehicle traveling data, a proportion of a vehicle autonomous control center serving as a driving subject;
in a case where the proportion is less than a predetermined proportion threshold, sending a control request to a vehicle administrator to enable the vehicle administrator to control vehicle steering; or in a case where the proportion is greater than the predetermined proportion threshold, acquiring real-time traffic data at a steering intersection, and calculating, based on the real-time traffic data at the steering intersection, a real-time processing index of the vehicle autonomous control center when a vehicle reaches the steering intersection;
in a case where the real-time processing index is less than a predetermined processing threshold, sending a control request to the vehicle administrator to enable the vehicle administrator to control vehicle steering; or in a case where the real-time processing index is greater than the predetermined processing threshold, acquiring real-time vehicle traveling data, and calculating a driving subject switching value of the vehicle in combination with the real-time traffic data at the steering intersection; and
in a case where a steering waiting duration is less than the driving subject switching value, controlling the vehicle steering by the vehicle autonomous control center; or otherwise, sending a control request to the vehicle administrator to enable the vehicle administrator to control the vehicle steering.

In some embodiments, determining, based on the historical vehicle traveling data, the proportion of the vehicle autonomous control center serving as the driving subject specifically includes: determining, based on the historical vehicle traveling data, a historical data volume where the vehicle autonomous control center serves as the driving subject when the vehicle reaches the steering intersection at a same time, and calculating the proportion.

In some embodiments, calculating, based on the real-time traffic data at the steering intersection, the real-time processing index of the vehicle autonomous control center when the vehicle reaches the steering intersection specifically includes:
acquiring historical road traffic data and attaching a driving subject tag thereto, extracting a quantity of motor vehicles at the steering intersection, a pedestrian flow at the steering intersection, and a quantity of non-motor vehicles at the steering intersection, and constructing a training set; and
acquiring, based on the real-time quantity of motor vehicles at the steering intersection, the real-time pedestrian flow at the steering intersection, and the real-time quantity of non-motor vehicles at the steering intersection, the real-time processing index of the vehicle autonomous control center when the vehicle reaches the steering intersection.

In some embodiments, prior to calculating, based on the real-time traffic data at the steering intersection, the real-time processing index of the vehicle autonomous control center when the vehicle reaches the steering intersection, the method further includes:
acquiring historical road traffic data and attaching a driving subject tag thereto, extracting a quantity of motor vehicles at the steering intersection, a pedestrian flow at the steering intersection, and a quantity of non-motor vehicles at the steering intersection, and constructing a training set; and
determining an optimal weight parameter by iterative optimization on a predetermined processing index function using the training set.

In some embodiments, calculating the driving subject switching value of the vehicle in combination with the real-time vehicle traveling data and the real-time traffic data at the steering intersection specifically includes: extracting a timestamp of the vehicle reaching a crosswalk stop line at the steering intersection and a timestamp of a second end of a green light at the steering intersection from the real-time vehicle traveling data, and calculating the driving subject switching value based on the timestamp of the vehicle reaching the crosswalk stop line at the steering intersection and the timestamp of the second end of the green light at the steering intersection.

In some embodiments, the real-time processing index is expressed as: $p = {w}_{1} {p}_{1} + {w}_{2} {p}_{2} + {w}_{3} {p}_{3} + {w}_{4} ;$
wherein *p* represents the real-time processing index, *p*₁ represents a motor vehicle quantity processing index, *p*₂ represents a pedestrian flow processing index, *p*₃ represents a non-motor vehicle quantity processing index, and *w*₁, *w*₂, *w*₃, and *w*₄ represent weight parameters;
wherein the motor vehicle quantity processing index is expressed as: ${p}_{1} = exp \left\{-{CA}_{y}\right\} ;$
the pedestrian flow processing index is expressed as: ${p}_{2} = exp \left\{-{PA}_{y}\right\} ;$
the non-motor vehicle quantity processing index is expressed as: ${p}_{3} = exp \left\{-{FA}_{y}\right\} ;$
wherein *CA_{y}* represents a quantity of motor vehicles at the steering intersection at time y, *PA_{y}* represents a pedestrian flow at the steering intersection at time y, and *FA_{y}* represents a quantity of non-motor vehicles at the steering intersection at time y.

In a second aspect, some embodiments of the present disclosure provide a vehicle steering control system based on autonomous driving. The system includes:
a proportion determining module, configured to: acquire historical vehicle traveling data, and determine, based on the historical vehicle traveling data, a proportion of a vehicle autonomous control center serving as a driving subject; and in a case where the proportion is less than a predetermined proportion threshold, send a control request to a vehicle administrator to enable the vehicle administrator to control vehicle steering;
a real-time processing module, configured to: in a case where the proportion is greater than the predetermined proportion threshold, acquire real-time traffic data at a steering intersection and calculate a real-time processing index of the vehicle autonomous control center when a vehicle reaches the steering intersection; and in a case where the real-time processing index is less than a predetermined processing threshold, send a control request to the vehicle administrator to enable the vehicle administrator to control the vehicle steering; and
a driving subject switching module, configured to: in a case where the real-time processing index is greater than the predetermined processing threshold, acquire real-time vehicle traveling data, and calculate a driving subject switching value of the vehicle in combination with the real-time traffic data at the steering intersection; and in a case where a steering waiting duration is less than the driving subject switching value, control the vehicle steering by the vehicle autonomous control center; or otherwise, send a control request to the vehicle administrator to enable the vehicle administrator to control the vehicle steering.

In a third aspect, some embodiments of the present disclosure provide an electronic device.

The electronic device includes: a memory, a processor, and a computer program stored on the memory, wherein the processor is configured to run the computer program to perform steps of the vehicle steering control method based on autonomous driving as described above.

In a fourth aspect, some embodiments of the present disclosure provide a computer-readable storage medium.

The computer-readable storage medium stores a computer program/instruction thereon, wherein the computer program/instruction, when executed by a processor, causes the processor to perform steps of the vehicle steering control method based on autonomous driving as described above.

In a fifth aspect, some embodiments of the present disclosure provide a computer program product.

The computer program product includes a computer program/instruction, wherein the computer program/instruction, when executed by a processor, causes the processor to perform steps of the vehicle steering control method based on autonomous driving as described above.

Compared with the related art, the present disclosure achieves the following beneficial effects:

The technical solutions according to the present disclosure comprehensively consider road traffic data and vehicle traveling data, utilize regularity of traffic conditions such as a morning peak and an evening peak in real life, and perform switching of a driving subject of a autonomous driving vehicle in combination with an actual driving condition of the autonomous driving vehicle, which not only reduces the task completion time of the autonomous driving vehicle, but also avoids the congestion possibility at a steering intersection.

### BRIEF DESCRIPTION OF DRAWINGS

The accompanying drawings herein, which are incorporated herein and constitute a part of the specification, illustrate several exemplary embodiments of the present disclosure and together with the description, serve to illustrate the present disclosure, construing no limitation to the present disclosure.
FIG. 1 is a schematic flowchart of a vehicle steering control method based on autonomous driving according to an embodiment of the present disclosure; and
FIG. 2 is a schematic system framework diagram of a vehicle steering control system based on autonomous driving according to an embodiment of the present disclosure.

### DETAILED DESCRIPTION

It should be noted that the detailed descriptions hereinafter are exemplary and illustrative, and are intended to further illustrate the present disclosure. Unless otherwise specified, all the technical and scientific terms used herein have the same meanings as those within common understandings of persons of ordinary skill in the art of the present disclosure.

It should be noted that the terms used herein are only intended to describe the specific embodiments, instead of causing any limitation to the exemplary embodiments of the present disclosure. As used herein, unless the context clearly indicates otherwise, the singular forms are also intended to include the plural forms. Additionally, the terms "comprise," "include," "have," and any variations thereof are intended to denote a covering but non-exclusive meaning. For example, a process, a method, a system, a product or a device that includes a series of steps or units are not necessarily limited to those implicitly listed steps or units, but is otherwise a process, a method, a system, a product or a device that includes other inherited steps or units not implicitly disclosed.

In cases of no conflict, the embodiments and features in the embodiments of the present disclosure may be combined together.

### Embodiment 1

During steering and traveling of a conventional autonomous driving vehicle, a determination of a safe driving system of the autonomous vehicle leads to an excessively long steering waiting time, which leads to a congestion risk at a steering intersection. Therefore, the present disclosure provides a vehicle steering control method based on autonomous driving.

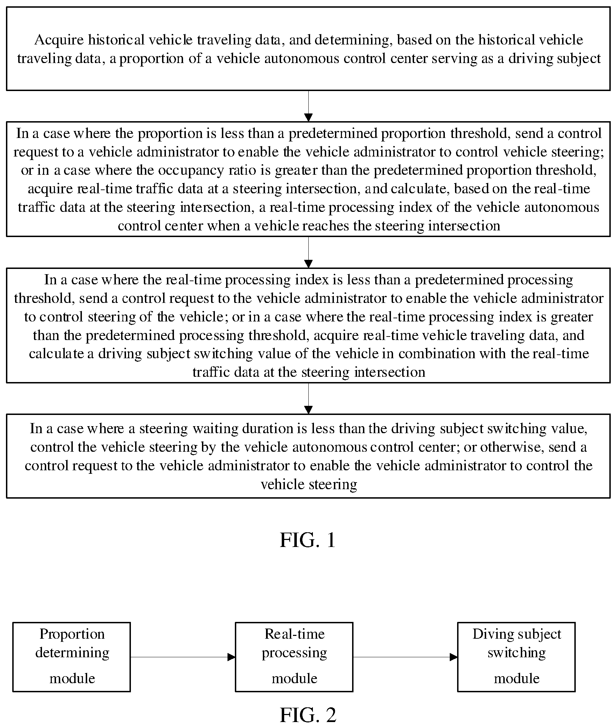

Next, the vehicle steering control method based on autonomous driving according to this embodiment is described in detail in combination with FIG. 1. The vehicle steering control method based on autonomous driving includes the following steps.

In S1, road traffic data and vehicle traveling data are acquired, and stored into a constructed steering storage database of an autonomous driving vehicle.

In this embodiment, the road traffic data includes a quantity of motor vehicles, a pedestrian flow, a quantity of non-motor vehicles, and real-time traffic light data at a steering intersection. The vehicle traveling data includes a timestamp of a vehicle reaching, a timestamp of reaching a crosswalk stop line, and a steering waiting duration.

A distance between front wheels of the autonomous driving vehicle and the crosswalk stop line, the timestamp of reaching the crosswalk stop line, and the steering waiting duration are identified within a sensing range using a radar sensor and an on-board camera; and the timestamp of the vehicle reaching, the real-time traffic light data, the quantity of motor vehicles, the pedestrian flow, and the quantity of non-motor vehicles at the steering intersection are acquired via a GPS system, wherein the timestamp of reaching the crosswalk stop line is generated based on the distance between the front wheels of the autonomous driving vehicle and the crosswalk stop line, and a real time.

In S2, a proportion of a vehicle autonomous control center serving as a driving subject is determined based on historical vehicle traveling data in the steering storage database of the autonomous driving vehicle; and in a case where the proportion is less than a predetermined proportion threshold, a control request is sent to a vehicle administrator to enable the vehicle administrator to control vehicle steering, and driving subject data is simultaneously updated; or in a case where the proportion is greater than the predetermined proportion threshold, step S3 is performed.

In this embodiment, the driving subject of the autonomous driving vehicle includes the vehicle administrator and the vehicle autonomous control center. In the steering storage database of the autonomous driving vehicle, a timestamp t of the autonomous driving vehicle reaching the steering intersection has a one-to-one correspondence with a driving subject A, that is, t→A.

In real life, traffic conditions have regularity, such as the morning peak and the evening peak. Therefore, in this embodiment, the regularity of the traffic conditions are utilized in combination with historical data, and a preliminary prejudgment is made on whether the driving subject needs to be switched based on a proportion of the vehicle autonomous control center serving as the driving subject at a target steering intersection at a same time, further improving a response speed of the autonomous driving vehicle during a traveling process.

As an embodiment, S2 specifically includes the following subsets.

In S201, a historical data volume where the vehicle autonomous control center serves as the driving subject when the vehicle reaches the steering intersection at the same time is determined, and the proportion is calculated. The proportion is expressed as: ${U}_{t} = \frac{n}{N} ;$
wherein n represents that there are n pieces of historical data where the driving subject is the vehicle autonomous control center when the autonomous driving vehicle reaches the steering intersection at time t, and N represents that there are a total of N pieces of historical data of the autonomous driving vehicle reaching the steering intersection.

In S202, in a case where the proportion of the vehicle autonomous control center serving as the driving subject is less than a proportion threshold, a control request is sent to the administrator, and driving subject data is simultaneously updated; or otherwise, S3 is performed.

Exemplarily, the predetermined proportion threshold is 0.5, n[i]={2, 3, 6, 8, 4}, and N[i]={6, 8, 9, 16, 4}, then the proportion Uₜ[i] of the vehicle autonomous control center serving as the driving subject ={0.333, 0.375, 0.333, 0.5, 1}, wherein i represents an i^{th} example. Then in the 1^{st}, 2^{nd}, and 3^{rd} examples, the vehicle directly sends the control request to the administrator and simultaneously updates the driving subject data; and in the 4^{th} and 5^{th} examples, S3 is performed.

In S3, a real-time processing index of the vehicle autonomous control center when the vehicle reaches the steering intersection is calculated based on the real-time traffic data at the steering intersection in the steering storage database of the autonomous driving vehicle; in a case where the real-time processing index is less than a predetermined processing threshold, a control request is sent to the vehicle administrator to enable the vehicle administrator to control vehicle steering; or in a case where the real-time processing index is greater than the predetermined processing threshold, S4 is performed.

Under different traffic conditions, such as a large traffic flow, a large pedestrian flow at the steering intersection, and a large quantity of non-motor vehicles, the processing capability of the autonomous driving vehicle may decrease, thereby failing to perform a steering operation in time. Therefore, in this embodiment, the traffic flow and the pedestrian flow are comprehensively considered to judge a real-time driving condition, and when the processing capability of the autonomous driving vehicle decreases, execution control is performed on the vehicle by the vehicle administrator.

As an embodiment, S3 specifically includes the following sub-steps.

In S301, a driving subject tag is attached to the real-time traffic data at the steering intersection.

In this embodiment, a real-time traffic dataset at the steering intersection after the driving subject tag is attached is expressed as: $\left.\left\{{CA}_{y}, {PA}_{y}, {FA}_{y}\right\}\right| {a}_{y} ;$
wherein a_{y} represents that the driving subject of the vehicle at time y is a, *CA_{y}* represents a value of a quantity of motor vehicles at the steering intersection at time y, *PA_{y}* represents a value of a pedestrian flow at the steering intersection at time y, and *FA_{y}* represents a value of a quantity of non-motor vehicles at the steering intersection at time y.

The real-time traffic dataset at the steering intersection includes traffic data of a plurality of vehicles based on autonomous driving. By attaching the driving subject tag to the traffic dataset at the steering intersection, it is convenient to query a driving subject attribution of traffic conditions at different steering intersections, thereby facilitating the calculation of the processing index of the vehicle autonomous control center when the vehicle reaches the steering intersection.

In S302, a real-time quantity of motor vehicles at the steering intersection, a real-time pedestrian flow at the steering intersection, and a real-time quantity of non-motor vehicles at the steering intersection when the driving subject is the vehicle autonomous control center are extracted based on the attached driving subject tag.

The real-time processing index of the vehicle autonomous control center when the vehicle reaches the steering intersection is acquired based on the real-time quantity of motor vehicles at the steering intersection, the real-time pedestrian flow at the steering intersection, and the real-time quantity of non-motor vehicles at the steering intersection. The real-time processing index is expressed as: $p = {w}_{1} {p}_{1} + {w}_{2} {p}_{2} + {w}_{3} {p}_{3} + {w}_{4} ;$
wherein *p* represents the real-time processing index, *p*₁ represents a motor vehicle quantity processing index, *p*₂ represents a pedestrian flow processing index, *p*₃ represents a non-motor vehicle quantity processing index, and *w*₁, *w*₂, *w*₃, and *w*₄ represent weight parameters;
wherein the motor vehicle quantity processing index is expressed as: ${p}_{1} = exp \left\{-{CA}_{y}\right\} ;$
the pedestrian flow processing index is expressed as: ${p}_{2} = exp \left\{-{PA}_{y}\right\} ;$ and
the non-motor vehicle quantity processing index is expressed as: ${p}_{3} = exp \left\{-{FA}_{y}\right\} ;$
wherein *CA_{y}* represents a quantity of motor vehicles at the steering intersection at time y, *PA_{y}* represents a pedestrian flow at the steering intersection at time y, and *FA_{y}* represents a quantity of non-motor vehicles at the steering intersection at time y.

In S303, in a case where the real-time processing index is less than the predetermined processing threshold, the control request is sent to the vehicle administrator to enable the vehicle administrator to control vehicle steering; or in a case where the real-time processing index is greater than the predetermined processing threshold, S4 is performed.

As an embodiment, prior to calculating, based on the real-time traffic data at the steering intersection, the real-time processing index of the vehicle autonomous control center when the vehicle reaches the steering intersection, the method further includes:
(1) acquiring historical road traffic data and attaching a driving subject tag thereto, extracting a quantity of motor vehicles at the steering intersection, a pedestrian flow at the steering intersection, and a quantity of non-motor vehicles at the steering intersection, and constructing a training set; and
(2) determining optimal weight parameters by iterative optimization on a predetermined processing index function using the training set, and continually updating *w*₁, *w*₂, *w*₃, *w*₄ and until the optimal weight parameters are found.

Specifically, K processing index functions are further recorded in the training set, wherein an f^{th} processing index function is denoted as *P_{f}* = *w*₁*_{f}x*₁ + *w*₂*_{f}x*₂ + *w*₃*_{f}x*₃ + *w*_{4*f*}, and *w*₁*_{f}, w*_{2*f*}, *w*_{3*f*}, and *w*_{4*f*} are respectively the weight parameters of the predetermined processing index function, and *x*₁, *x*₂, and *x*₃ are all sample independent variables.

Taking *p*₁, *p*₂, and *p*₃ as the sample independent variables and sequentially substituting the same into *x*₁, *x*₂, and *x*₃ respectively, an f^{th} real-time processing index is calculated using the processing index function *P_{f}.* Letting f=f+1, iterative calculation is performed on the real-time processing index to acquire a total of K real-time processing indices. A processing index function *P_{f}* corresponding to a minimum real-time processing index is screened out, and the weight parameters *w*_{1*f*}, *w*_{2*f*}, *w*_{3*f*}, and *w*_{4*f*} are locked as the optimal weight parameters.

In S4, a driving subject switching value of the vehicle is calculated in combination with real-time vehicle traveling data and the real-time traffic data at the steering intersection; and in a case where a steering waiting duration is less than the driving subject switching value, the vehicle steering is controlled by the vehicle autonomous control center; or otherwise, a control request is sent to the vehicle administrator to enable the vehicle administrator to control the vehicle steering. S4 specifically includes the following sub-steps.

In S401, a timestamp of the vehicle reaching a crosswalk stop line at the steering intersection and a timestamp of a second end of a green light at the steering intersection from the real-time vehicle traveling data are extracted, and the driving subject switching value is calculated based on the timestamp of the vehicle reaching the crosswalk stop line at the steering intersection and the timestamp of the second end of the green light at the steering intersection. The driving subject switching value is expressed as:$TP = T 2 - T 1 ;$ wherein TP represents the driving subject switching value, T1 represents a timestamp of the vehicle reaching a crosswalk stop line at the steering intersection, and T2 represents a timestamp of the second end of a green light at the steering intersection.

In S402, a steering waiting duration is acquired from the real-time road traffic data; and in a case where the steering waiting duration YP>TP or YP=TP, the vehicle sends a control request directly to the vehicle administrator, and simultaneously updates the driving subject data; or otherwise, continues to control the vehicle by the vehicle autonomous control center until the vehicle is successfully steered, and updates the driving subject data.

Exemplarily, the timestamp T1 of the vehicle reaching the stop line at the steering intersection is 08:00:00, the timestamp T2 of the second end of the green light at the steering intersection is 08:01:06, and the actual waiting duration YP of the vehicle at the stop line is 1 minute and 7 seconds. Then, the driving subject switching value TP=T2-T1=1 minute and 6 seconds. Therefore, YP>TP, that is, the vehicle directly sends the control request to the vehicle administrator, and simultaneously updates the driving subject data.

The timestamp T1 of the vehicle reaching the stop line at the steering intersection is 10:00:00, the timestamp T2 of the second end of the green light at the steering intersection is 10:01:06, and the actual waiting duration YP of the vehicle at the stop line is 1 minute and 0 seconds. Then, the driving subject switching value TP=T2-T1=1 minute and 6 seconds. Therefore, YP<TP, that is, the vehicle continues to be controlled by the vehicle autonomous control center until the vehicle is successfully steered, and the driving subject data is updated.

The timestamp T1 of the vehicle reaching the stop line at the steering intersection is 18:00:00, the timestamp T2 of the second end of the green light at the steering intersection is 18:02:15, and the actual waiting duration YP of the vehicle at the stop line is 2 minutes and 15 seconds. Then, the driving subject switching value TP=T2-T1=2 minutes and 15 seconds. Therefore, YP=TP, that is, the vehicle directly sends the control request to the vehicle administrator, and simultaneously updates the driving subject data.

### Embodiment 2

In combination with FIG. 2, this embodiment provides a vehicle steering control system based on autonomous driving. The system includes:
a proportion determining module, configured to: acquire historical vehicle traveling data, and determine, based on the historical vehicle traveling data, a proportion of a vehicle autonomous control center serving as a driving subject; and in a case where the proportion is less than a predetermined proportion threshold, send a control request to a vehicle administrator to enable the vehicle administrator to control vehicle steering;
a real-time processing module, configured to: in a case where the proportion is greater than the predetermined proportion threshold, acquire real-time traffic data at a steering intersection and calculate a real-time processing index of the vehicle autonomous control center when a vehicle reaches the steering intersection; and in a case where the real-time processing index is less than a predetermined processing threshold, send a control request to the vehicle administrator to enable the vehicle administrator to control the vehicle steering; and
a driving subject switching module, configured to: in a case where the real-time processing index is greater than the predetermined processing threshold, acquire real-time vehicle traveling data, and calculate a driving subject switching value of the vehicle in combination with the real-time traffic data at the steering intersection; and in a case where a steering waiting duration is less than the driving subject switching value, control the vehicle steering by the vehicle autonomous control center; or otherwise, send a control request to the vehicle administrator to enable the vehicle administrator to control the vehicle steering.

It should be noted herein that the proportion determining module, the real-time processing module, and the driving subject switching module correspond to the steps in Embodiment 1, and these modules and their corresponding steps practice the same examples and are applied in the same scenario, which are however not limited to the content disclosed in Embodiment 1. It should be noted that the above modules, as a part of the system, may be practiced in, for example, a computer system containing a set of computer-executable instructions.

### Embodiment 3

This embodiment provides an electronic device. The electronic device includes a memory, a processor, and a computer instruction stored on the memory, wherein the processor is configured to execute the computer instruction to perform steps of the vehicle steering control method based on autonomous driving as described above.

### Embodiment 4

This embodiment provides a computer-readable storage medium storing a computer instruction thereon, wherein the computer instruction, when executed by a processor, causes the processor to perform steps of the vehicle steering control method based on autonomous driving as described above.

### Embodiment 5

This embodiment provides a computer program product. The computer program product includes a computer program/instruction. The computer program/instruction, when executed by a processor, causes the processor to perform the steps of the vehicle steering control method based on autonomous driving as described above.

The present disclosure is described based on the flowcharts and/or block diagrams of the method, device (system), and computer program product. It should be understood that each process and/or block in the flowcharts and/or block diagrams, and any combination of the processes and/or blocks in the flowcharts and/or block diagrams may be implemented using computer program instructions. These computer program instructions may be issued to a computer, a dedicated computer, an embedded processor, or processors of other programmable data processing device to generate a machine, which enables the computer or the processors of other programmable data processing devices to execute the instructions to implement an apparatus for implementing specific functions in at least one process in the flowcharts and/or at least one block in the block diagrams.

These computer program instructions may also be stored in a computer-readable memory capable of causing a computer or other programmable data processing devices to work in a specific mode, such that the instructions stored on the computer-readable memory implement a product including an instruction apparatus. The instruction apparatus implements specific functions in at least one process in the flowcharts and/or at least one block in the block diagrams.

These computer program instructions may also be stored on a computer or other programmable data processing devices, such that the computer or the other programmable data processing devices execute a series of operations or steps to implement processing of the computer. In this way, the instructions, when executed on the computer or other programmable data processing devices, implement the specific functions in at least one process in the flowcharts and/or at least one block in the block diagrams.

In the above embodiments, descriptions give different particular emphases to various embodiments, and the portion of some embodiment that is not described may be referenced to the relevant description in other embodiments.

Described above are merely preferred embodiments of the present disclosure, but are not intended to limit the present disclosure. A person skilled in the art may derive various modifications and variations. Any modification, equivalent replacement, or improvement made without departing from the spirit and principle of the present disclosure should fall within the protection scope of the present disclosure.

## Claims

1. A vehicle steering control method based on autonomous driving, comprising:
acquiring historical vehicle traveling data, and determining, based on the historical vehicle traveling data, a proportion of a vehicle autonomous control center serving as a driving subject;
in a case where the proportion is less than a predetermined proportion threshold, sending a control request to a vehicle administrator to enable the vehicle administrator to control vehicle steering; or in a case where the proportion is greater than the predetermined proportion threshold, acquiring real-time traffic data at a steering intersection, and calculating a real-time processing index of the vehicle autonomous control center when a vehicle reaches the steering intersection;
in a case where the real-time processing index is less than a predetermined processing threshold, sending a control request to the vehicle administrator to enable the vehicle administrator to control vehicle steering; or in a case where the real-time processing index is greater than the predetermined processing threshold, acquiring real-time vehicle traveling data, and calculating a driving subject switching value of the vehicle in combination with the real-time traffic data at the steering intersection; and
in a case where a steering waiting duration is less than the driving subject switching value, controlling the vehicle steering by the vehicle autonomous control center; or otherwise, sending a control request to the vehicle administrator to enable the vehicle administrator to control the vehicle steering.

2. The vehicle steering control method based on autonomous driving according to claim 1, wherein the determining, based on the historical vehicle traveling data, the proportion of the vehicle autonomous control center serving as the driving subject specifically comprises: determining, based on the historical vehicle traveling data, a historical data volume where the vehicle autonomous control center serves as the driving subject when the vehicle reaches the steering intersection at a same time, and calculating the proportion.

3. The vehicle steering control method based on autonomous driving according to claim 1, wherein the calculating, based on the real-time traffic data at the steering intersection, the real-time processing index of the vehicle autonomous control center when the vehicle reaches the steering intersection specifically comprises:
attaching a driving subject tag to the real-time traffic data at the steering intersection, and extracting, based on the attached driving subject tag, a real-time quantity of motor vehicles at the steering intersection, a real-time pedestrian flow at the steering intersection, and a real-time quantity of non-motor vehicles at the steering intersection; and
acquiring, based on the real-time quantity of motor vehicles at the steering intersection, the real-time pedestrian flow at the steering intersection, and the real-time quantity of non-motor vehicles at the steering intersection, the real-time processing index of the vehicle autonomous control center when the vehicle reaches the steering intersection.

4. The vehicle steering control method based on autonomous driving according to claim 1, wherein prior to calculating, based on the real-time traffic data at the steering intersection, the real-time processing index of the vehicle autonomous control center when the vehicle reaches the steering intersection, the method further comprises:
acquiring historical road traffic data and attaching a driving subject tag thereto, extracting a quantity of motor vehicles at the steering intersection, a pedestrian flow at the steering intersection, and a quantity of non-motor vehicles at the steering intersection, and constructing a training set; and
determining an optimal weight parameter by iterative optimization on a predetermined processing index function using the training set.

5. The vehicle steering control method based on autonomous driving according to claim 1, wherein the calculating the driving subject switching value of the vehicle in combination with the real-time vehicle traveling data and the real-time traffic data at the steering intersection specifically comprises: extracting a timestamp of the vehicle reaching a crosswalk stop line at the steering intersection and a timestamp of a second end of a green light at the steering intersection from the real-time vehicle traveling data, and calculating a subject switching value based on the timestamp of the vehicle reaching the crosswalk stop line at the steering intersection and the timestamp of the second end of the green light at the steering intersection.

6. The vehicle steering control method based on autonomous driving according to claim 1, wherein the real-time processing index is expressed as: $p = {w}_{1} {p}_{1} + {w}_{2} {p}_{2} + {w}_{3} {p}_{3} + {w}_{4} ;$
wherein *p* represents the real-time processing index, *p*₁ represents a motor vehicle quantity processing index, *p*₂ represents a pedestrian flow processing index, *p*₃ represents a non-motor vehicle quantity processing index, and *w*₁, *w*₂, *w*₃, and *w*₄ represent weight parameters;
wherein the motor vehicle quantity processing index is expressed as: ${p}_{1} = exp \left\{-{CA}_{y}\right\} ;$
the pedestrian flow processing index is expressed as: ${p}_{2} = exp \left\{-{PA}_{y}\right\} ;$ and
the non-motor vehicle quantity processing index is expressed as: ${p}_{3} = exp \left\{-{FA}_{y}\right\} ;$
wherein *CA_{y}* represents a quantity of motor vehicles at the steering intersection at time y, *PA_{y}* represents a pedestrian flow at the steering intersection at time y, and *FA_{y}* represents a quantity of non-motor vehicles at the steering intersection at time y.

7. A vehicle steering control system based on autonomous driving, comprising:
a proportion determining module, configured to: acquire historical vehicle traveling data, and determine, based on the historical vehicle traveling data, a proportion of a vehicle autonomous control center serving as a driving subject; and in a case where the proportion is less than a predetermined proportion threshold, send a control request to a vehicle administrator to enable the vehicle administrator to control vehicle steering;
a real-time processing module, configured to: in a case where the proportion is greater than the predetermined proportion threshold, acquire real-time traffic data at a steering intersection and calculate a real-time processing index of the vehicle autonomous control center when a vehicle reaches the steering intersection; and in a case where the real-time processing index is less than a predetermined processing threshold, send a control request to the vehicle administrator to enable the vehicle administrator to control the vehicle steering; and
a subject switching module, configured to: in a case where the real-time processing index is greater than the predetermined processing threshold, acquire real-time vehicle traveling data, and calculate a driving subject switching value of the vehicle in combination with the real-time traffic data at the steering intersection; and in a case where a steering waiting duration is less than the driving subject switching value, control the vehicle steering by the vehicle autonomous control center; or otherwise, send a control request to the vehicle administrator to enable the vehicle administrator to control the vehicle steering.

8. An electronic device, comprising: a memory, a processor, and a computer program stored on the memory, wherein the processor is configured to run the computer program to perform steps of the vehicle steering control method based on autonomous driving as defined in any one of claims 1 to 6.

9. A computer-readable storage medium storing a computer program/instruction thereon, wherein the computer program/instruction, when executed by a processor, causes the processor to perform steps of the vehicle steering control method based on autonomous driving as defined in any one of claims 1 to 6.

10. A computer program product, comprising: a computer program/instruction, wherein the computer program/instruction, when executed by a processor, causes the processor to perform steps of the vehicle steering control method based on autonomous driving as defined in any one of claims 1 to 6.
